# EUROPEAN PATENT APPLICATION

(11) **EP 3 484 150 A1**
(43) Date of publication of application: **15.05.2019**
(21) Application number: 17306550.9
(22) Date of filing: 09.11.2017
(51) Int. Cl.: H04N 19/176, H04N 19/119, H04N 19/13, H04N 19/96, H04N 19/91

(54) **METHODS AND DEVICES FOR PICTURE ENCODING AND DECODING**

(71) Applicant: THOMSON LICENSING, 92130 Issy les Moulineaux (FR)
(72) Inventor: LELEANNEC, Fabrice, 35576 Cesson-Sévigné Cedex (FR); POIRIER, Tangi, 35576 Cesson-Sévigné Cedex (FR); CHEN, Ya, 35576 Cesson-Sévigné Cedex (FR)
(74) Representative: Huchet, Anne

(57) **Abstract**

A decoding method is disclosed. First a context for a flag is determined (S220). The flag indicates whether a current block is split into sub-blocks according to a quad-tree responsive to whether a quad-tree depth of a neighboring block is larger than a quad-tree depth of the current block incremented by a value. Then, the flag is decoded (S230) based at least on the determined context.

## Description

### 1. TECHNICAL FIELD

At least one of the present embodiments generally relates to a method and a device for picture encoding and decoding, and more particularly, to a method and a device for encoding and decoding a picture block using quad-tree partitioning.

### 2. BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original picture block and the predicted picture block, often denoted as prediction errors or prediction residuals, are transformed, quantized and entropy coded. During encoding the original picture block is usually partitioned/split into sub-blocks possibly using quad-tree partitioning. To reconstruct the video, the compressed data is decoded by inverse processes corresponding to the prediction, transform, quantization and entropy coding.

The partitioning of a block is signaled in a bitstream by various syntax elements. These syntax elements are usually encoded by a context-based adaptive binary arithmetic coding method that uses probability models selected adaptively based on local contexts. Precisely defining the contexts is of importance for coding efficiency.

### 3. BRIEF SUMMARY

A decoding method is disclosed that comprises:
- determining a context for a flag indicating whether a current block is split into sub-blocks according to a quad-tree responsive to whether a quad-tree depth of a neighboring block is larger than a quad-tree depth of the current block incremented by a value; and
- decoding the flag based at least on the determined context.

An encoding method is also disclosed that comprises:
- determining a context for a flag indicating whether a current block is split into sub-blocks according to a quad-tree responsive to whether a quad-tree depth of a neighboring block is larger than a quad-tree depth of the current block incremented by a value; and
- encoding the flag based at least on the determined context.

A decoding device is disclosed that comprises :
- means for determining a context for a flag indicating whether a current block is split into sub-blocks according to a quad-tree responsive to whether a quad-tree depth of a neighboring block is larger than a quad-tree depth of the current block incremented by a value; and
- means for decoding the flag based at least on the determined context.

A decoding device is disclosed that comprises a communication interface configured to access at least a stream and at least one processor configured to:
- determine a context for a flag indicating whether a current block is split into sub-blocks according to a quad-tree responsive to whether a quad-tree depth of a neighboring block is larger than a quad-tree depth of the current block incremented by a value; and
- decode the flag from the accessed stream based at least on the determined context.

An encoding device is disclosed that comprises:
- means for determining a context for a flag indicating whether a current block is split into sub-blocks according to a quad-tree responsive to whether a quad-tree depth of a neighboring block is larger than a quad-tree depth of the current block incremented by a value; and
- means for encoding the flag based at least on the determined context.

An encoding device is disclosed that comprises a communication interface configured to access at least a current block of a picture and at least one processor configured to:
- determine a context for a flag indicating whether the accessed current block is split into sub-blocks according to a quad-tree responsive to whether a quad-tree depth of a neighboring block is larger than a quad-tree depth of the current block incremented by a value; and
- encoding the flag in a stream based at least on the determined context.

A computer program is disclosed that comprises software code instructions for performing the encoding and decoding methods according to the various embodiments when the computer program is executed by a processor.

A computer-readable storage medium carrying a software program including program code instructions for encoding and decoding methods according to the various embodiments.

A bitstream is disclosed that is formatted to include encoded data representative of a current block of a picture, the encoded data being encoded according to the encoding method. A computer-readable storage medium is disclosed that carries the bitstream.

The following embodiments apply to the decoding method, decoding devices encoding method, encoding devices, computer program, computer-readable storage medium and bitstream disclosed above.

In an embodiment, context is further determined responsive to the quad-tree depth of the current block.

As an example, the value is equal to one.

In an exemplary embodiment, the neighboring block is an adjacent block located to the left of a top-left corner of the current block or an adjacent block located on top of the top-left corner of the current block.

In a specific and non-limiting embodiment, determining a context for a flag comprises:
- initializing a context index to zero;
- incrementing by one the context index in the case where the quad-tree depth of a left neighboring block is larger than the quad-tree depth of the current block;
- incrementing by one the context index in the case where the quad-tree depth of a left neighboring block is larger than the quad-tree depth of the current block incremented by one;
- incrementing by one the context index in the case where the quad-tree depth of a top neighboring block is larger than the quad-tree depth of the current block; and
- incrementing by one the context index in the case where the quad-tree depth of a left neighboring block is larger than the quad-tree depth of the current block incremented by one.

In another specific and non-limiting embodiment, determining a context for a flag further comprises :
- determining a lowest quad-tree depth and a largest quad-tree depth between a quadtree depth of the adjacent block located to the left of a top-left corner of the current block, a quad-tree depth of an adjacent block located on top of the top-left corner of the current block, a quad-tree depth of an adjacent block located to the left of a bottom-left corner of the current block, a quad-tree depth of an adjacent block located on top of a top-right corner of the current block;
- setting the context index equal to 5 in the case where the quad-tree depth of the current block is lower than the lowest quad-tree depth;
- setting the context index equal to 6 in the case where the quad-tree depth of the current block is larger than the largest quad-tree depth; and
- increasing the context index by 2 plus five times the quad-tree depth of the current block.

### 4. BRIEF SUMMARY OF THE DRAWINGS

- Figure 1 represents an exemplary architecture of a transmitter configured to encode a picture in a bitstream according to a specific and non-limiting embodiment;
- Figure 2 illustrates an exemplary video encoder, e.g. an encoder of HEVC type, adapted to execute the encoding method of any one of Figures 7, 9 and 10;
- Figure 3 illustrates a partitioning of a coding tree unit into coding units where coding units can be split both according to quad-tree and symmetric binary tree split modes according to the prior art;
- Figure 4 illustrates the coding tree associated with the partitioning of the coding tree unit represented on Figure 3;
- Figure 5 illustrates quad-tree and symmetric binary tree split modes according to the prior art;
- Figure 6 illustrates asymmetric binary tree split modes and symmetric triple tree split modes according to a specific and non-limiting embodiment;
- Figure 7 illustrates a flowchart of a method for encoding a picture block in a bitstream according to a specific and non-limiting embodiment;
- Figure 8 illustrates a coding tree unit split into coding units with their associated quad tree depths;
- Figure 9 illustrate a flowchart of a method for encoding a flag indicating whether the current block is split into sub-blocks according to a quad-tree, according to a specific and non-limiting embodiment;
- Figure 10 illustrate a flowchart of a method for determining a context index for a flag indicating whether the current block is split into sub-blocks according to a quad-tree according to a specific and non-limiting embodiment;
- Figure 11 illustrates an exemplary architecture of a receiver configured to decode a picture from a bitstream to obtain a decoded picture according to a specific and non-limiting embodiment;
- Figure 12 illustrates a block diagram of an exemplary video decoder, e.g. a video decoder of HEVC type, adapted to execute the decoding method of any one of Figures 10, 13 and 14;
- Figure 13 illustrates a flowchart of a method for decoding a picture from a bitstream according to a specific and non-limiting embodiment; and
- Figure 14 illustrates a flowchart of a method for decoding a flag from a bitstream according to a specific and non-limiting embodiment, wherein the flag indicates whether the current block is split into sub-blocks according to a quad-tree.

### 5. DETAILED DESCRIPTION

It is to be understood that the figures and descriptions have been simplified to illustrate elements that are relevant for a clear understanding of the present embodiments, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another.

A picture is an array of luma samples in monochrome format or an array of luma samples and two corresponding arrays of chroma samples (or three arrays of trichromatic color samples such as RGB) in 4:2:0, 4:2:2, and 4:4:4 colour format. Generally, a "block" addresses a specific area in a sample array (e.g., luma Y), and a "unit" includes the collocated block of all color components (luma Y and possibly chroma Cb and chroma Cr). A slice is an integer number of basic coding units such as HEVC coding tree units or H.264 macroblock units. A slice may consist of a complete picture as well as part thereof. Each slice may include one or more slice segments.

In the following, the word "reconstructed" and "decoded" can be used interchangeably. Usually but not necessarily "reconstructed" is used on the encoder side while "decoded" is used on the decoder side. It should be noted that the term "decoded" or "reconstructed" may mean that a bitstream is partially "decoded" or "reconstructed," for example, the signals obtained after deblocking filtering but before SAO filtering, and the reconstructed samples may be different from the final decoded output that is used for display. We may also use the terms "image," "picture," and "frame" interchangeably.

In the following, the terms "partition" and "split" are used interchangeably.

Various embodiments are described with respect to the HEVC standard. However, the present embodiments are not limited to HEVC, and can be applied to other standards, recommendations, and extensions thereof, including for example HEVC or HEVC extensions like Format Range (RExt), Scalability (SHVC), Multi-View (MV-HEVC) Extensions and H.266. The various embodiments are described with respect to the encoding/decoding of a picture block. They may be applied to encode/decode a whole picture or a whole sequence of pictures.

Various methods are described below, and each of the methods comprises one or more steps or actions for achieving the described method. Unless a specific order of steps or actions is required for proper operation of the method, the order and/or use of specific steps and/or actions may be modified or combined.

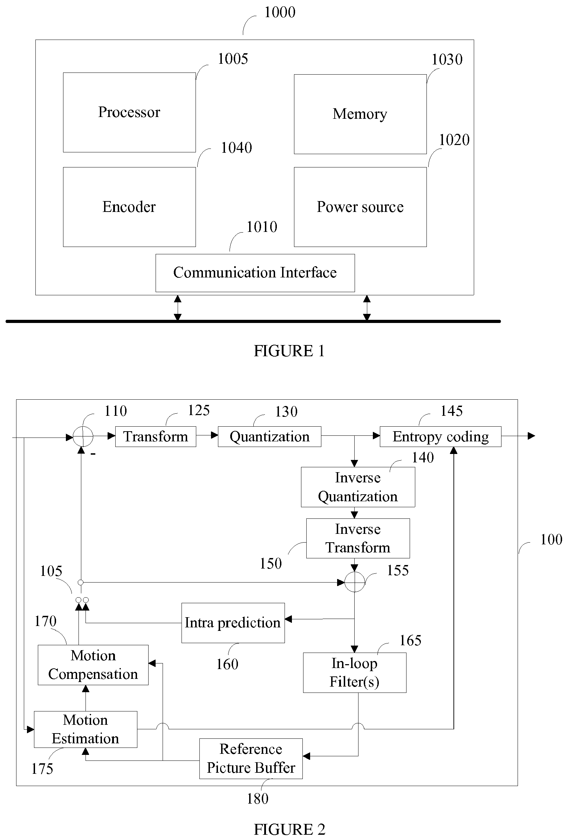

**Figure 1** represents an exemplary architecture of a transmitter 1000 configured to encode a picture in a bitstream according to a specific and non-limiting embodiment.

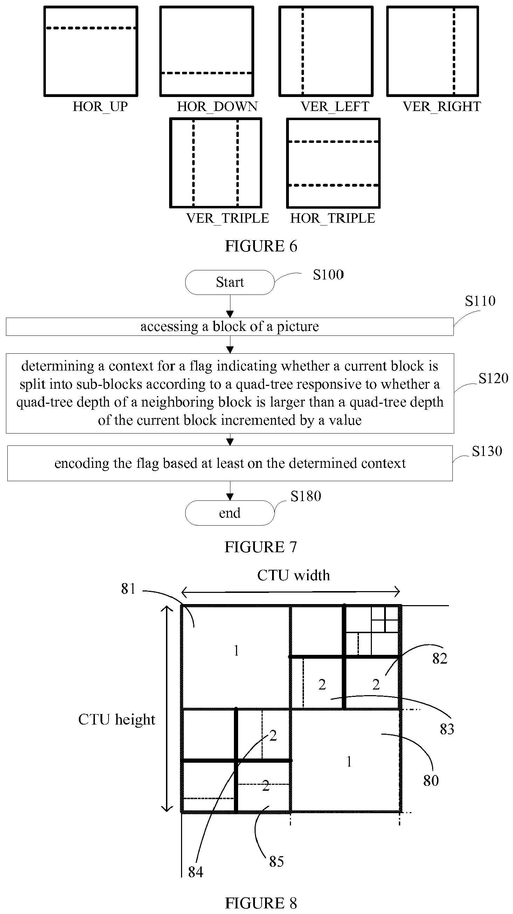

The transmitter 1000 comprises one or more processor(s) 1005, which could comprise, for example, a CPU, a GPU and/or a DSP (English acronym of Digital Signal Processor), along with internal memory 1030 (e.g. RAM, ROM, and/or EPROM). The transmitter 1000 comprises one or more communication interface(s) 1010 (e.g. a keyboard, a mouse, a touchpad, a webcam), each adapted to display output information and/or allow a user to enter commands and/or data; and a power source 1020 which may be external to the transmitter 1000. The transmitter 1000 may also comprise one or more network interface(s) (not shown). Encoder module 1040 represents the module that may be included in a device to perform the coding functions. Additionally, encoder module 1040 may be implemented as a separate element of the transmitter 1000 or may be incorporated within processor(s) 1005 as a combination of hardware and software as known to those skilled in the art.
The picture may be obtained from a source. According to different embodiments, the source can be, but is not limited to:
- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).
According to different embodiments, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to an exemplary and non-limiting embodiment, the transmitter 1000 further comprises a computer program stored in the memory 1030. The computer program comprises instructions which, when executed by the transmitter 1000, in particular by the processor 1005, enable the transmitter 1000 to execute the encoding method described with reference to any one of Figures 7, 9 and 10. According to a variant, the computer program is stored externally to the transmitter 1000 on a non-transitory digital data support, e.g. on an external storage medium such as a HDD, CD-ROM, DVD, a read-only and/or DVD drive and/or a DVD Read/Write drive, all known in the art. The transmitter 1000 thus comprises a mechanism to read the computer program. Further, the transmitter 1000 could access one or more Universal Serial Bus (USB)-type storage devices (e.g., "memory sticks.") through corresponding USB ports (not shown).
According to exemplary and non-limiting embodiments, the transmitter 1000 can be, but is not limited to:
- a mobile device;
- a communication device;
- a game device;
- a tablet (or tablet computer);
- a laptop;
- a still picture camera;
- a video camera;
- an encoding chip or encoding device/apparatus;
- a still picture server; and
- a video server (e.g. a broadcast server, a video-on-demand server or a web server).

**Figure 2** illustrates an exemplary video encoder 100, e.g. an encoder of HEVC type, adapted to execute the encoding method of any one of Figures 7, 9 and 10. The encoder 100 is an example of a transmitter 1000 or part of such a transmitter 1000.

For coding, a picture is usually partitioned into basic coding units, e.g. into coding tree units (CTU) in HEVC or into macroblock units in H.264. A set of possibly consecutive basic coding units is grouped into a slice. A basic coding unit contains the basic coding blocks of all color components. In HEVC, the smallest coding tree block (CTB) size 16x16 corresponds to a macroblock size as used in previous video coding standards. It will be understood that, although the terms CTU and CTB are used herein to describe encoding/decoding methods and encoding/decoding apparatus, these methods and apparatus should not be limited by these specific terms that may be worded differently (e.g. macroblock) in other standards such as H.264.

In HEVC coding, a picture is partitioned into CTUs of square shape with a configurable size typically 64x64, 128x128, or 256x256. A CTU is the root of a quadtree partitioning into 4 square Coding Units (CU) of equal size, i.e. half of the patent block size in width and height. A quad-tree is a tree in which a parent node can be split into four child nodes, each of which may become parent node for another split into four child nodes. In HEVC, a coding Block (CB) represents the Coding Unit data associated to one color component. It is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU.

In more recent encoding systems, a CTU is the root of a coding tree partitioning into Coding Units (CU). A coding tree is a tree in which a parent node (usually corresponding to a CU) can be split into child nodes (e.g. into 2, 3 or 4 child nodes), each of which may become parent node for another split into child nodes. In addition to the quad-tree split mode, new split modes (symmetric binary tree split modes, asymmetric binary tree split modes and triple tree split modes) are also defined which increases the total number of possible split modes. The coding tree has a unique root node, e.g. a CTU. A leaf of the coding tree is a terminating node of the tree. Each node of the coding tree represents a CU that may be further split into smaller CUs also named sub-CUs or more generally sub-blocks. Once the partitioning of a CTU into CUs is determined, CUs corresponding to the leaves of the coding tree are encoded. The partitioning of a CTU into CUs and the coding parameters used for encoding each CU (corresponding to a leaf of the coding tree) may be determined on the encoder side through a rate distortion optimization procedure. There is no partitioning of a CB into PBs and TBs, i.e. a CU is made of a single PU and a single TU.

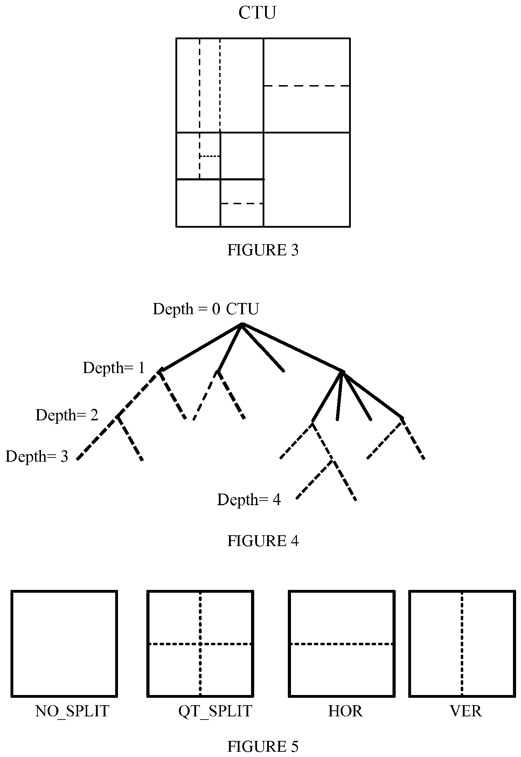

Symmetric binary tree split modes are defined to allow a CU to be split horizontally or vertically into two coding units of equal size. **Figure 3** represents a partitioning of a CTU into CUs where coding units can be split both according to quadtree and symmetric binary tree split modes. On **Figure 3** solid lines indicate quad-tree partitioning and dotted lines indicate binary splitting of a CU into symmetric CUs. **Figure 4** represents the associated coding tree. On Figure 4, solid lines represent the quad-tree splitting and dotted lines represent the binary splitting that is spatially embedded in the quad-tree leaves. **Figure 5** depicts the 4 split modes used in Figure 3. The mode NO_SPLIT indicates that the CU is not further split. The mode QT_SPLIT indicates that the CU is split into 4 quadrants according to a quad-tree, the quadrants being separated by two split lines. The mode HOR indicates that the CU is split horizontally into two CUs of equal size separated by one split line. VER indicates that the CU is split vertically into two CUs of equal size separated by one split line. The split lines are represented by dashed lines on Figure 5.

Asymmetric binary tree split modes are defined to allow a CU to be split horizontally into two coding units with respective rectangular sizes (w,h/4) and (w,3h/4) or vertically into two coding units with respective rectangular sizes (w/4,h) and (3w/4,h)) as depicted on **Figure 6****.** The two coding units are separated by one split line represented by a dashed line on Figure 6.

Figure 6 also illustrates triple tree split modes according to which a coding unit is split into three coding units in both vertical and horizontal directions. In horizontal direction, a CU is split into three coding units of respective sizes (w, h/4), (w,h/2) and (w, h/4). In vertical direction, a CU is split into three coding units of respective sizes (w/4, h), (w/2, h) and (w/4, h).

In the following, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of numerous sizes.

Back to figure 2, in the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Residuals are calculated by subtracting (110) a predicted sample block (also known as a predictor) from the original picture block.

CUs in intra mode are predicted from reconstructed neighboring samples, e.g. within the same slice. A set of 35 intra prediction modes is available in HEVC, including a DC, a planar, and 33 angular prediction modes. The intra prediction reference may thus be reconstructed from the row and column adjacent to the current block. CUs in inter mode are predicted from reconstructed samples of a reference picture stored in a reference picture buffer (180).

The residuals are transformed (125) and quantized (130). The quantized transform coefficients, as well as motion vectors and other syntax elements, are entropy coded (145) to output a bitstream.

The entropy coding may be, e.g., Context Adaptive Binary Arithmetic Coding (CABAC), Context Adaptive Variable Length Coding (CAVLC), Huffman, arithmetic, exp-Golomb, etc. CABAC is a method of entropy coding first introduced in H.264 and also used in HEVC. CABAC involves binarization, context modeling and binary arithmetic coding. Binarization maps the syntax elements to binary symbols (bins). Context modeling determines the probability of each regularly coded bin (i.e. non-bypassed) based on some specific context. Finally, binary arithmetic coding compresses the bins to bits according to the determined probability.

Binarization defines a unique mapping of syntax element values to sequences of bins. Several binarization processes may be such as unary, truncated unary, k-th order Ext-Golomb and fixed-length binarization. The binarization process may be selected based on the type of syntax element and in some cases also based on the value of a previously processed syntax element. In the regular coding mode (as opposed to the bypass coding mode), each bin value is then encoded by using a probability model which may be determined by a fixed choice based on the type of syntax element and the bin position or adaptively chosen from a plurality of probability models depending on side information (e.g. depth/size of a block, position within a TU, etc).

Context modeling provides an accurate probability estimate required to achieve high coding efficiency. Accordingly, it is highly adaptive and different context models can be used for different bins and the probability of that context model is updated based on the values of the previously coded bins. Selection of the probability model is referred to as context modeling. In the bypass coding mode, a fixed probability model is applied with equal probability for both bin values '0' and '1'. The bypass coding mode in H.264 was mainly used for signs and least significant bins of absolute values of quantized coefficients. In HEVC the majority of possible bin values is handled by the bypass coding mode.

Arithmetic coding is based on recursive interval division. A range, with an initial value of 0 to 1, is divided into two subintervals based on the probability of the bin. The encoded bits provide an offset that, when converted to a binary fraction, selects one of the two subintervals, which indicates the value of the decoded bin. After every decoded bin, the range is updated to equal the selected subinterval, and the interval division process repeats itself. The range and offset have limited bit precision, so renormalization is required whenever the range falls below a certain value to prevent underflow. Renormalization can occur after each bin is decoded. Arithmetic coding can be done using an estimated probability (context based encoding), or assuming equal probability of 0.5 (bypass coding mode).

The encoder may also skip the transform or bypass both transform and quantization, i.e., the residual is coded directly without the application of the transform or quantization processes. The encoder comprises a decoding loop and thus decodes an encoded block to provide a reference for further predictions. The quantized transform coefficients are de-quantized (140) and inverse transformed (150) to provide decoded residuals. A picture block is reconstructed by combining (155) the decoded residuals and the predicted sample block. An in-loop filter (165) may be applied to the reconstructed picture, for example, to perform deblocking/SAO (Sample Adaptive Offset) filtering to reduce coding artifacts. The filtered picture may be stored in the reference picture buffer (180) and used as reference for other pictures.

**Figure 7** represents a flowchart of a method for encoding a picture block in a bitstream according to a specific and non-limiting embodiment.
The method starts at step S100. At step S110, a transmitter 1000, e.g. such as the encoder 100, accesses a block of a picture. At step S120, the transmitter determines whether a quad-tree depth of a neighboring block is larger than a quad-tree depth of the current block incremented by a value. As an example, the value is equal to one. Then, the transmitter determines a context responsive to the previous determination wherein the context is to be used for encoding a flag indicating whether the current block is split into sub-blocks according to a quad-tree. A flag is a binary syntax element.

In a coding tree, each node representing a CU has an associated depth as indicated on Figure 4. The depth of a CU indicates the number of successive splits (regardless of the split mode) for obtaining this CU. **Figure 8** more particularly indicates, in an example, the quad-tree depth of each CU of a CTU. The quad-tree depth of a CU represents the number of successive quad-tree splits for obtaining this CU. The current CU 80 and the top left CU 81 are obtained after a first split of the CTU in 4 CUs, thus their quad-tree depths are equal to 1. The CUs 82, 83, 84 and 85 are obtained after two successive quad-tree splits, thus their quad-tree depths are equal to 2. The quad-tree depth of the CU 83, 84 and 85 is equal to 2 even if they are further partitioned into 2 sub-CUs according to a binary tree. Therefore, the quad-tree depth of a given CU may be different from its depth. As an example, the quad-tree depth of the sub-CUs of CU 85 is 2 while their depth is 3. At step S130, the transmitter encodes the flag responsive to the determined context. More precisely, the determined context that may be identified by an index ctxId defines a probability model that is used in the arithmetic encoder to encode the flag. The design of context models reflects the aim to find a good compromise between the conflicting objectives of avoiding unnecessary modeling cost and exploiting the statistical dependencies to a large extent.

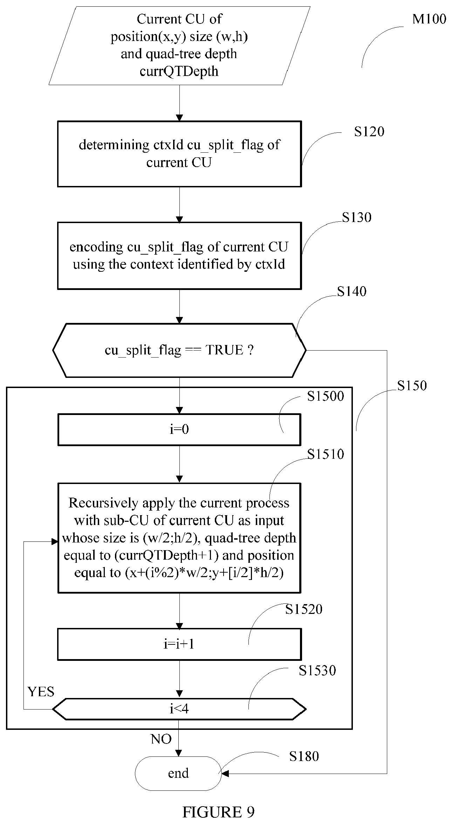

**Figure 9** represents a flowchart of a method M100 for encoding a flag (e.g. cu_split_flag) indicating whether the current block is split into sub-blocks according to a quad-tree in a bitstream according to a specific and non-limiting embodiment.

The method M100 takes as input a current CU of position (x,y), size (w, h) and quad-tree depth currQTDepth. At step S120, the transmitter determines an index ctxId identifying for the current CU cu_split_flag a context.

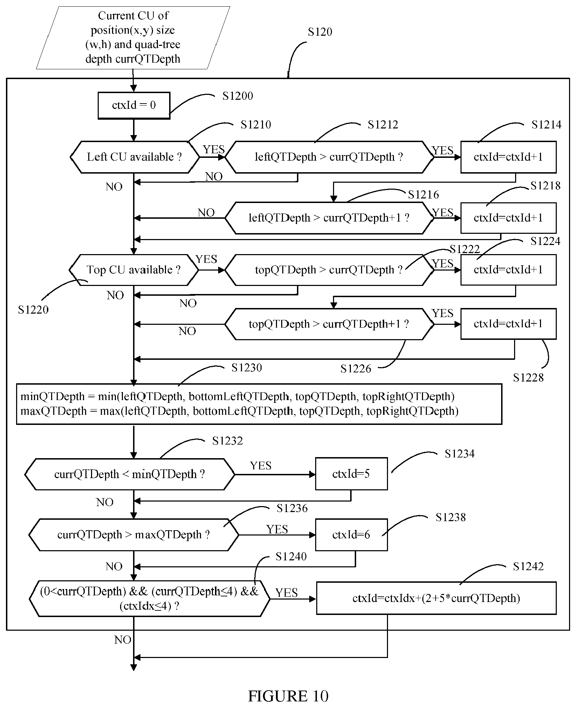

**Figure 10** is a flowchart that depicts step S120 in details according to a specific and non-limiting embodiment.

At step S1200, the index ctxId is initialized to zero. At step S1210, it is checked whether a left CU is available. The left CU is an adjacent CU located on the left of the top-left corner position of the current CU. In the case where the left CU is available, the method continues at step S1212. Otherwise, the method continues at step S1220. At step S1212, it is checked whether the quad-tree depth of the left CU (leftQTDepth) is strictly larger than the quad-tree depth (currQTDepth of the current CU). In the case where leftQTDepth > currQTDepth, ctxId is incremented by one at step S1214 and the method continues at step S1216. Otherwise (leftQTDepth ≤ currQTDepth), the method continues at step S1220. At step S1216, it is further checked whether leftQTDepth is strictly larger than currQTDepth incremented by a value. On figure 10, the value is equal to 1. In the case where leftQTDepth > (currQTDepth + 1), ctxId is incremented by one at step S1218 and the method continues at step S1220. Otherwise, the method continues at step S1220.

At step S1200, it is checked whether a top CU is available. The top CU is an adjacent CU located on the top of the top-left corner position of the current CU. In the case where the top CU is available, the method continues at step S1222. Otherwise, the method continues at step S1230. At step S1222, it is checked whether the quad-tree depth of the top CU (topQTDepth) is strictly larger than the quad-tree depth (currQTDepth) of the current CU). In the case where topQTDepth > currQTDepth, ctxId is incremented by one at step S1224 and the method continues at step S1226. Otherwise (topQTDepth ≤ currQTDepth), the method continues at step S1230. At step S1226, it is further checked whether topQTDepth is strictly larger than currQTDepth incremented by a value. On figure 10, the value is equal to 1. In the case where leftQTDepth > (currQTDepth + 1), ctxId is incremented by one at step S1228 and the method continues at step S1230. Otherwise, the method continues at step S1230.

At step S1230, the smallest depth value minQTDepth among leftQTDepth, bottomLeftQTDepth, topQTDepth, topRightQTDepth is determined. bottomLeftQTDepth is the quad-tree depth of a bottom left CU which is an adjacent CU located on the left of the bottom-left corner position of the current CU and topRightQTDepth is the quad-tree depth of a top right CU which is an adjacent CU located on the top of the top-right corner position of the current CU. The largest depth value maxQTDepth among leftQTDepth, bottomLeftQTDepth, topQTDepth, topRightQTDepth is also determined.

At step S1232, it is checked whether currQTDepth is smaller than minQTDepth, optionally decremented by a positive value noted offset. In the case where currQTDepth

< (minQTDepth-offset) then ctxId is set equal to 5 at step S1234. Otherwise (currQTDepth ≥ (minQTDepth-offset)) the method continues at step S1236. On figure 10, offset is equal to zero.

At step S1236, it is checked whether currQTDepth is larger than maxQTDepth, optionally incremented by a positive offset. In the case where currQTDepth >

(maxQTDepth+offset') then ctxId is set equal to 6 at step S1238. On figure 10, offset' is equal to zero.

Otherwise (currQTDepth ≤ (maxQTDepth+offset')) the method continues at step S1240.

At step S1240, it is checked whether currQTDepth is larger than 0 and lower or equal to 4 and whether ctxIdx is lower or equal to 4. In the case where (0< currQTDepth≤4) and (ctxIdx≤4), then the method continues ate step S1242.

In a variant, the step S120 comprises only the steps S1200 to S1228 and thus not the steps S1230 to S1242. In another variant, the step S120 comprises only the steps S1200 to S1230 and thus not the steps S1232 to S1242. In another variant, the step S120 only comprises the steps S1200 and S1230 to S1242 and thus not the steps S1210 to S1228.

Back to Figure 9, at step S130 the transmitter encodes the flag cu_split_flag using the context identified by ctxId determined at step S120. More precisely, the probability model associated with the context identified by ctxId is thus used in the arithmetic encoder to encode the flag.

At step S140, the transmitter checks whether the flag cu_split_flag indicates the current CU is split in sub-CUs according to a quad-tree (i.e. cu_split_flag is TRUE). In the case where cu_split_flag is TRUE, then at step S150, the method M100 is applied recursively on each sub-CUs of the current CU. To this aim, an index i is initialized to zero at step S1500. At step S1510, the method M100 is applied recursively with the sub-CU of the current CU as input. The sub-CU has a size (w/2, h/2), a quad-tree depth equal to the quad tree depth of the current CU incremented by one and a position equal to Anne At step S1520, i is incremented by 1. At step S1530, it is checked whether i<4. In the case where i<4, the method continues at step S1510 with a next sub-CU of the current CU. Otherwise the method ends at step S180.

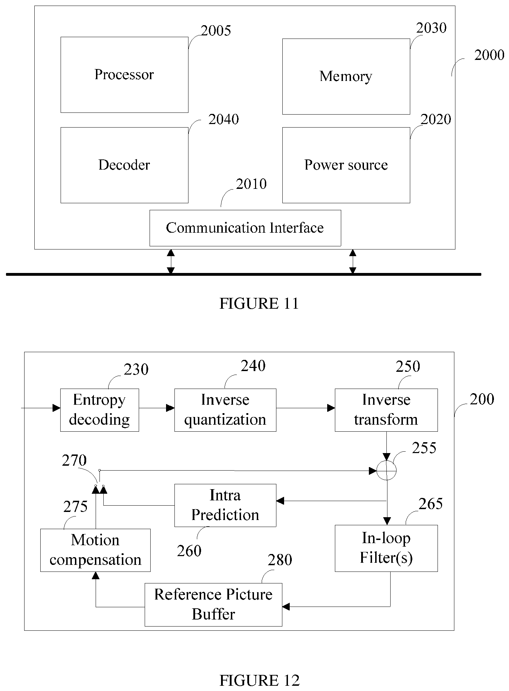

**Figure 11** represents an exemplary architecture of a receiver 2000 configured to decode a picture from a bitstream to obtain a decoded picture according to a specific and non-limiting embodiment.

The receiver 2000 comprises one or more processor(s) 2005, which could comprise, for example, a CPU, a GPU and/or a DSP (English acronym of Digital Signal Processor), along with internal memory 2030 (e.g. RAM, ROM and/or EPROM). The receiver 2000 comprises one or more communication interface(s) 2010 (e.g. a keyboard, a mouse, a touchpad, a webcam), each adapted to display output information and/or allow a user to enter commands and/or data (e.g. the decoded picture); and a power source 2020 which may be external to the receiver 2000. The receiver 2000 may also comprise one or more network interface(s) (not shown). The decoder module 2040 represents the module that may be included in a device to perform the decoding functions. Additionally, the decoder module 2040 may be implemented as a separate element of the receiver 2000 or may be incorporated within processor(s) 2005 as a combination of hardware and software as known to those skilled in the art.

The bitstream may be obtained from a source. According to different embodiments, the source can be, but is not limited to:
- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).
According to different embodiments, the decoded picture may be sent to a destination, e.g. a display device. As an example, the decoded picture is stored in a remote or in a local memory, e.g. a video memory or a RAM, a hard disk. In a variant, the decoded picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.
According to a specific and non-limiting embodiment, the receiver 2000 further comprises a computer program stored in the memory 2030. The computer program comprises instructions which, when executed by the receiver 2000, in particular by the processor 2005, enable the receiver to execute the decoding method described with reference to any one of Figures 10, 13 and 14. According to a variant, the computer program is stored externally to the receiver 2000 on a non-transitory digital data support, e.g. on an external storage medium such as a HDD, CD-ROM, DVD, a read-only and/or DVD drive and/or a DVD Read/Write drive, all known in the art. The receiver 2000 thus comprises a mechanism to read the computer program. Further, the receiver 2000 could access one or more Universal Serial Bus (USB)-type storage devices (e.g., "memory sticks.") through corresponding USB ports (not shown).
According to exemplary and non-limiting embodiments, the receiver 2000 can be, but is not limited to:
- a mobile device;
- a communication device;
- a game device;
- a set top box;
- a TV set;
- a tablet (or tablet computer);
- a laptop;
- a video player, e.g. a Blu-ray player, a DVD player;
- a display; and
- a decoding chip or decoding device/apparatus.

**Figure 12** illustrates a block diagram of an exemplary video decoder 200, e.g. a video decoder of HEVC type, adapted to execute the decoding method of any one of Figures 10, 13 and 14. The video decoder 200 is an example of a receiver 2000 or part of such a receiver 2000. In the exemplary decoder 200, a bitstream is decoded by the decoder elements as described below. Video decoder 200 generally performs a decoding pass reciprocal to the encoding pass as described in Figure 2, which performs video decoding as part of encoding video data.

In particular, the input of the decoder includes a video bitstream, which may be generated by the video encoder 100. The bitstream is first entropy decoded (230) to obtain transform coefficients, motion vectors, and other coded information. The transform coefficients are de-quantized (240) and inverse transformed (250) to decode residuals. The decoded residuals are then combined (255) with a predicted sample block (also known as a predictor) to obtain a decoded/reconstructed picture block. The predicted sample block may be obtained (270) from intra prediction (260) or motion-compensated prediction (i.e., inter prediction) (275). As described above, AMVP and merge mode techniques may be used during motion compensation, which may use interpolation filters to calculate interpolated values for sub-integer samples of a reference block. An in-loop filter (265) is applied to the reconstructed picture. The in-loop filter may comprise a deblocking filter and a SAO filter. The filtered picture is stored at a reference picture buffer (280).

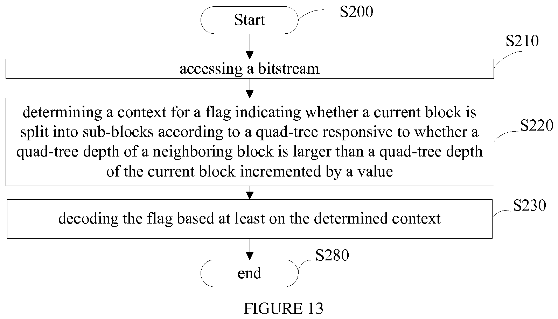

**Figure 13** represents a flowchart of a method for decoding a picture from a bitstream according to a specific and non-limiting embodiment.
The method starts at step S200. At step S210, a receiver 2000 such as the decoder 200 accesses a bitstream. At step S220, the receiver determines whether a quad-tree depth of a neighboring block is larger than a quad-tree depth of the current block incremented by a value. As an example, the value is equal to one. Then, the receiver determines a context responsive to the previous determination wherein the context is to be used for decoding a flag indicating whether the current block is split into sub-blocks according to a quad-tree.

At step S230, the receiver decodes the flag responsive to the determined context. More precisely, the determined context that may be identified by an index ctxId defines a probability model that is used in the arithmetic decoder to decode the flag.

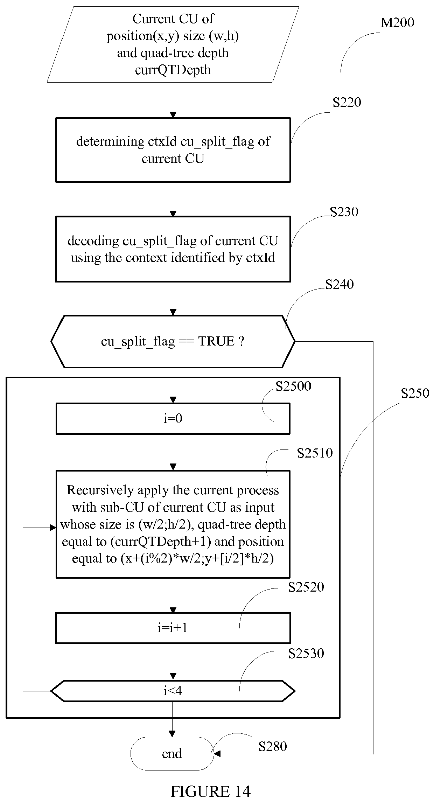

**Figure 14** represents a flowchart of a method M200 for decoding a flag (e.g. cu_split_flag) from a bitstream according to a specific and non-limiting embodiment, wherein the flag indicates whether the current block is split into sub-blocks according to a quad-tree.

The method M200 takes as input a current CU of position (x,y), size (w, h) and quad-tree depth currQTDepth. At step S220, the receiver determines an index ctxId identifying for the current CU cu_split_flag a context.
**Figure 10** is a flowchart that depicts step S220 in details according to a specific and non-limiting embodiment. The step S220 is identical to step S120.
At step S230 the receiver decodes the flag cu_split_flag using the context identified by ctxId determined at step S220. More precisely, the probability model associated with the context identified by ctxId is thus used in the arithmetic decoder to decode the flag. At step S240, the receiver checks whether the flag cu_split_flag indicates the current CU is split in sub-CUs according to a quad-tree (i.e. cu_split_flag is TRUE). In the case where cu_split_flag is TRUE, then at step S250, the method M200 is applied recursively on each sub-CUs of the current CU. To this aim, an index i is initialized to zero at step S2500. At step S2510, the method M200 is applied recursively with the sub-CU of the current CU as input. The sub-CU has a size (w/2, h/2), a quad-tree depth equal to the quad tree depth of the current CU incremented by one and a position equal to (x+(i%2)*w/2;y+└*i*/2┘*h/2), where % is the modulo operator and └ ┘ returns the highest integer value that is smaller than (i/2). At step S2520, i is incremented by 1. At step S2530, it is checked whether i<4. In the case where i<4, the method continues at step S2510 with a next sub-CU of the current CU. Otherwise the method ends at step S280.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A decoding method comprising:
- determining (S220) a context for a flag indicating whether a current block is split into sub-blocks according to a quad-tree responsive to whether a quad-tree depth of a neighboring block is larger than a quad-tree depth of the current block incremented by a value; and
- decoding (S230) the flag based at least on the determined context.

2. The decoding method according to claim 1, wherein the context is further determined responsive to the quad-tree depth of the current block.

3. The decoding method according to claim 1 or claim 2, wherein the value is equal to one.

4. The decoding method according to any one of claims 1 to 3, wherein the neighboring block is an adjacent block located to the left of a top-left corner of the current block or an adjacent block located on top of the top-left corner of the current block.

5. The decoding method according to any one of claims 3 to 4, wherein determining (S220) a context for a flag comprises :
- initializing (S1200) a context index to zero;
- incrementing by one (S1214) the context index in the case where the quad-tree depth of a left neighboring block is larger than the quad-tree depth of the current block;
- incrementing by one (S1218) the context index in the case where the quad-tree depth of a left neighboring block is larger than the quad-tree depth of the current block incremented by one;
- incrementing by one (S1224) the context index in the case where the quad-tree depth of a top neighboring block is larger than the quad-tree depth of the current block; and
- incrementing by one (S1228) the context index in the case where the quad-tree depth of a left neighboring block is larger than the quad-tree depth of the current block incremented by one.

6. The decoding method according to claim 5, wherein determining (S220) a context for a flag further comprises :
- determining (S1230) a lowest quad-tree depth and a largest quad-tree depth between a quad-tree depth of the adjacent block located to the left of a top-left corner of the current block, a quad-tree depth of an adjacent block located on top of the top-left corner of the current block, a quad-tree depth of an adjacent block located to the left of a bottom-left corner of the current block, a quad-tree depth of an adjacent block located on top of a top-right corner of the current block;
- setting (S1232) the context index equal to 5 in the case where the quad-tree depth of the current block is lower than the lowest quad-tree depth;
- setting (S1236) the context index equal to 6 in the case where the quad-tree depth of the current block is larger than the largest quad-tree depth; and
- increasing (S1242) the context index by 2 plus five times the quad-tree depth of the current block.

7. An encoding method comprising:
- determining (S120) a context for a flag indicating whether a current block is split into sub-blocks according to a quad-tree responsive to whether a quad-tree depth of a neighboring block is larger than a quad-tree depth of the current block incremented by a value; and
- encoding (S130) the flag based at least on the determined context.

8. The encoding method according to claim 7, wherein the context is further determined responsive to the quad-tree depth of the current block.

9. The encoding method according to claim 7 or claim 8, wherein the value is equal to one.

10. The encoding method according to any one of claims 7 to 9, wherein the neighboring block is an adjacent block located to the left of a top-left corner of the current block or an adjacent block located on top of the top-left corner of the current block.

11. The encoding method according to any one of claims 9 to 10, wherein determining (S120) a context for a flag comprises :
- initializing (S1200) a context index to zero;
- incrementing by one (S1214) the context index in the case where the quad-tree depth of a left neighboring block is larger than the quad-tree depth of the current block;
- incrementing by one (S1218) the context index in the case where the quad-tree depth of a left neighboring block is larger than the quad-tree depth of the current block incremented by one;
- incrementing by one (S1224) the context index in the case where the quad-tree depth of a top neighboring block is larger than the quad-tree depth of the current block; and
- incrementing by one (S1228) the context index in the case where the quad-tree depth of a left neighboring block is larger than the quad-tree depth of the current block incremented by one.

12. The encoding method according to claim 11, wherein determining (S120) a context for a flag further comprises :
- determining (S1230) a lowest quad-tree depth and a largest quad-tree depth between a quad-tree depth of the adjacent block located to the left of a top-left corner of the current block, a quad-tree depth of an adjacent block located on top of the top-left corner of the current block, a quad-tree depth of an adjacent block located to the left of a bottom-left corner of the current block, a quad-tree depth of an adjacent block located on top of a top-right corner of the current block;
- setting (S1232) the context index equal to 5 in the case where the quad-tree depth of the current block is lower than the lowest quad-tree depth;
- setting (S1236) the context index equal to 6 in the case where the quad-tree depth of the current block is larger than the largest quad-tree depth; and
- increasing (S1242) the context index by 2 plus five times the quad-tree depth of the current block.

13. A decoding device comprising :
- means for determining a context for a flag indicating whether a current block is split into sub-blocks according to a quad-tree responsive to whether a quad-tree depth of a neighboring block is larger than a quad-tree depth of the current block incremented by a value; and
- means for decoding the flag based at least on the determined context.

14. An encoding device comprising:
- means for determining a context for a flag indicating whether a current block is split into sub-blocks according to a quad-tree responsive to whether a quad-tree depth of a neighboring block is larger than a quad-tree depth of the current block incremented by a value; and
- means for encoding the flag based at least on the determined context.

15. A computer program comprising software code instructions for performing the encoding and decoding methods according to any one of claims 1-12 when the computer program is executed by a processor.
